## Europäisches Patentamt
## European Patent Office
## Office européen des brevets

(11) Publication number: **0 105 540**
**B1**

# EUROPEAN PATENT SPECIFICATION

(45) Date of publication of patent specification: **29.10.86**

(21) Application number: **83201251.2**

(22) Date of filing: **31.08.83**

(51) Int. Cl.⁴: **C 23 C 8/18,** F 16 C 33/62, F 16 C 33/32

(54) **Method for producing steel parts for a rolling bearing.**

(30) Priority: **06.09.82 NL 8203465**

(43) Date of publication of application: **18.04.84 Bulletin 84/16**

(45) Publication of the grant of the patent: **29.10.86 Bulletin 86/44**

(84) Designated Contracting States: **DE FR GB NL**

(56) References cited:
**US-A-2 236 728**
**US-A-3 558 200**
**US-A-3 737 204**

**CHEMICAL ABSTRACTS, vol. 88, no. 26, 26th June 1978, page 268, no. 195467e, Columbus, Ohio, USA R.G. WENSEL: "Testing of unlubricated water-immersed carbon-steel ball bearings"**

(73) Proprietor: **SKF Industrial Trading & Development Company B.V.**
**Kelvinbaan 16 P.O. Box 50**
**NL-3430 AB Nieuwegein (NL)**

(72) Inventor: **Nützel, Hans Georg**
**Bosuillaan 36**
**NL-3722 XP Bilthoven (NL)**

(74) Representative: **Merkelbach, B.**
**SKF Engineering & Research Centre B.V.**
**Kelvinbaan 16 P.O. Box 50**
**NL-3430 AB Nieuwegein (NL)**

Courier Press, Leamington Spa, England.

**0 105 540**

## Description

The invention relates to a method for producing steel parts for a rolling bearing, in particular a bearing for use in jet engines, by subjecting said parts to a heat-treatment with superheated steam.

Such a method is disclosed in US patent 2 236 728. This method however started from the use of a ferrous metal whereupon a resistant coating of certain depth is formed to withstand scuffing or scoring or to get an appreciable wear in service, although the hardness is not mentioned.

Average temperatures of up to 500°C and peak temperatures of up to 600°C appear in ball bearings used in jet engines. Under these circumstances, a grade of steel having good hot hardness and good resistance to corrosion is required for the ball bearings. Therefore BG 42 grades of steel (summary, see Table I) have hitherto been used for producing parts of ball bearings which must be used under these circumstances. This grade of steel combines good corrosion resistance and good hot hardness. BG42 in fact is trade mark for special high temperature corrosion resistance steel.

The disadvantage of these grades of steel, however, is that their workability leaves a great deal to be desired. In addition, BG 42 steel is produced on only a small scale, which acts to raise the price accordingly.

The object of the invention is to produce, in a cheaper way, parts for a ball bearing which, at least under operating conditions, have very good resistance to corrosion and outstanding hot hardness.

This object is accomplished in that the parts are manufactured of M2 steel whereafter said parts are subjected to the heat treatment with superheated steam for forming a surface skin of $Fe_3O_4$. It appears that when an M2 steel is heat-treated in this fashion the steel, which of itself already has outstanding hot hardness, likewise acquires very good resistance to corrosion, so that M2 steel becomes suitable for producing ball bearing parts. In addition, it has been shown that obtaining the surface skin by the method pursuant to the invention can prevent "seizing" between rolling members and races in case too little or no lubricant film is present between these parts, in virtue of the fact that the oxide skin has, as it were, a self-lubricating effect. M2 steel is defined under AISI-SAE standards.

These ball bearing parts can be used at higher temperatures than such parts of untreated M2 steel, since untreated M2 steel, at temperatures of 500—600°C, offers little resistance to corrosion.

Inasmuch as M2 steel is a very widely used grade of steel, the purchase and working thereof will be considerably more economical.

The parts are preferably treated in an air-tight oven during the injection of superheated steam, while the temperature of the heat treatment is preferably 550°C. A skin-thickness of 10—20 mµ is preferred in order to withstand rough load conditions under severe corrosive circumstances. Preferably, the surface skin has a bright appearance of blue $Fe_3O_4$.

To test the mechanical properties of M2 steel treated with heat pursuant to the invention, 30 balls of M2 steel having a diameter of 7,3125 mm and so treated were assembled, with associated parts, into two bearings which were rotated at 2500 rpm under a load of 45 KN, whilst Alvania RS® being present as lubricant. A bearing was removed from the test set-up after $22 \cdot 10^6$ revolutions with none of its balls damaged. One ball of the second bearing exhibited some flaking after $225 \cdot 10^6$ revolutions of that bearing.

The surface of all balls tested, with the exception of the aforementioned single ball with signs of flaking, still looked bright at the end.

TABLE I

| % by wt. | C | Cr | V | W | Mo | Mn | Si |
|---|---|---|---|---|---|---|---|
| BG 42 steel | 1.15 | 14.5 | 1.2 | | 4.0 | 0.50 | 0.30 |
| M2 steel | 0.85 | 4.0 | 2.0 | 6.0 | 5.0 | | |

## Claims

1. Method for producing steel parts for a rolling bearing by subjecting said parts to a heat-treatment with superheated steam whereby a surface skin of $Fe_3O_4$ is formed, characterized in that the parts are manufactured of M2 steel (AISI—SAE standard).

2. Method according to claim 1, characterized in that the parts are bearings for use in jet engines.

3. Method according to claim 1 or 2, characterized in that the parts are treated in an air-tight oven during the injection of superheated steam.

4. Method according to one of claims 1 to 3, characterized in that the temperature of the heat treatment is 550°C.

5. Parts produced pursuant to the method according to claims 1—4 characterized in that the parts consist of M2 steel with a surface skin of bright blue $Fe_3O_4$.

6. Parts according to claim 5, characterized in that the surface skin of $Fe_3O_4$ has a thickness of 10—20 mµ.

7. Rolling bearing assembled of parts according to claim 5 or 6.

2

## 0 105 540

### Patentansprüche

1. Verfahren zur Herstellung von Stahlteilen für ein Wälzlager durch Unterziehen der genannten Teile unter eine Wärmebehandlung mit überhitztem Dampf, wodurch eine Oberflächenschicht aus $Fe_3O_4$ gebildet wird, dadurch gekennzeichnet, daß die Teile aus M2-Stahl(AISI—SAE—Standard) hergestellt werden.

2. Verfahren nach Anspruch 1, dadurch gekennzeichnet, daß die Teile Lager zur Verwendung in Strahltriebwerken sind.

3. Verfahren nach Anspruch 1 oder 2, dadurch gekennzeichnet, daß die Teile in einem luftdichten Ofen während der Einspritzung von überhitztem Dampf behandelt werden.

4. Verfahren nach einem der vorhergehenden Ansprüche, dadurch gekennzeichnet, daß die Temperatur der Wärmebehandlung 550°C beträgt.

5. Teile, hergestellt gemäß dem Verfahren nach den Ansprüche 1 bis 4, dadurch gekennzeichnet, daß die Teile aus M2-Stahl mit einer Oberflächenschicht aus hochblauem $Fe_3O_4$ bestehen.

6. Teile nach Anspruch 5, dadurch gekennzeichnet, daß die Oberflächenschicht aus $Fe_3O_4$ eine Dicke von 10—20 mµ hat.

7. Wälzlager, zusammengebaut aus Teilen gemäß Anspruch 5 oder 6.

### Revendications

1. Procédé pour la fabrication d'éléments en acier pour un palier à roulement, par exposition desdits éléments à un traitement thermique avec de la vapeur surchauffée, ce par quoi une couche superficielle de $Fe_3O_4$ est formée, caractérisé par le fait que les éléments sont fabriqués en acier M2 (norme AISI—SAE).

2. Procédé selon la revendication 1, caractérisé par le fait que les éléments sont des roulements à utiliser dans des moteurs à réaction.

3. Procédé selon la revendication 1 ou 2, caractérisé par le fait que les éléments sont traités dans un four étanche à l'air avec injection de vapeur surchauffée.

4. Procédé selon l'une des revendications 1 à 3, caractérisé par le fait que la température du traitement thermique est de 550°C.

5. Eléments fabriqués conformément au procédé selon les revendications 1 à 4, caractérisé par le fait que les éléments sont constitués d'acier M2 avec une couche superficielle de $Fe_3O_4$ bleu brillant.

6. Elements selon la revendication 5, caractérisés par le fait que la couche superficielle de $Fe_3O_4$ a une épaisseur de 10—20 nm.

7. Palier à roulement constitué de l'assemblage d'éléments selon la revendication 5 ou 6.

3